# EUROPÄISCHE PATENTSCHRIFT

(11) **EP 3 909 019 B1**
(45) Veröffentlichungstag und Bekanntmachung des Hinweises auf die Patenterteilung: **24.09.2025**
(21) Anmeldenummer: 19823768.7
(22) Anmeldetag: 04.12.2019
(51) Int. Cl.: H04N 17/00, H04N 23/90

(54) **VERFAHREN ZUR LOKALISIERUNG VON KAMERAS SOWIE EIN KAMERASYSTEM UND EIN FAHRZEUG MIT EINEM KAMERASYSTEM**
METHOD FOR LOCATING CAMERAS, AND A CAMERA SYSTEM AND A VEHICLE HAVING A CAMERA SYSTEM
PROCÉDÉ DE LOCALISATION DE CAMÉRAS, SYSTÈME DE CAMÉRAS ET VÉHICULE COMPORTANT UN SYSTÈME DE CAMÉRAS

(30) Priorität: 09.01.2019 DE 102019200186
(43) Veröffentlichungstag der Anmeldung: 17.11.2021
(73) Patentinhaber: AUMOVIO Autonomous Mobility Germany GmbH, 85057 Ingolstadt (DE)
(72) Erfinder: ZINNER, Helge, 90411 Nürnberg (DE)
(74) Vertreter: Aumovio Corporation
(86) Internationale Anmeldenummer: PCT/DE2019/200141
(87) Internationale Veröffentlichungsnummer: WO 2020/143870

(56) Entgegenhaltungen:
- EP-A1- 2 530 647
- US-A1- 2016 284 087

## Beschreibung

Die Erfindung betrifft ein Verfahren zur Lokalisierung von Kameras sowie ein Kamerasystem und ein Fahrzeug mit einem Kamerasystem.

Heutzutage sind Fahrerassistenzsysteme nicht mehr aus Kraftfahrzeugen wegzudenken. Fahrerassistenzsysteme weisen Funktionen auf, die den Fahrer eines Fahrzeugs beim Fahren unterstützen. Dies wird insbesondere dadurch erreicht, dass das System das Umfeld erfasst bzw. aufzeichnet und die erfassten Informationen verarbeitet und dann entsprechende Fahrmanöver durchführt oder dem Fahrer die Umfeldinformationen gut erkennbar wiedergibt. Zur Erfassung des Umfelds kommen insbesondere Kameras zum Einsatz. Bekannt sind beispielsweise Frontkameras, die im Bereich der Windschutzscheibe angeordnet sind und einen Bereich vor dem Fahrzeug erfassen. Ferner gehören nach hinten schauende Kameras zum Stand der Technik. Auch Surround-View-Systeme kommen inzwischen immer häufiger zum Einsatz. Surround-View-Systeme weisen in der Regel vier Kameras auf, die insbesondere als Fischaugenkameras ausgebildet sind, wobei insbesondere eine Kamera vorne am Kühlergrill, eine am Heck und je eine im Fuß eines Seitenspiegels des Fahrzeugs angeordnet ist. Jede Kamera kann mehr als 180° Erfassungswinkel haben, so dass das System das gesamte Fahrzeugumfeld in 360°-Umkreis erfassen kann. Die Bilder der Kameras bekannter Surround-View-Systeme werden fusioniert, wobei es dafür wichtig ist, dass genau klar ist, von welcher Kamera die einzelnen Bilder kommen. Hierzu kommen insbesondere codierte Kameras zum Einsatz. Dies geht mit Mehraufwand und damit erhöhten Kosten und Zeit einher. Eine weitere Möglichkeit zur Erkennung der Position der Kamera kann durch eine direkte Anbindung der Kameras an eine Fusionseinheit bei spezieller Codierung von Ports geschaffen werden. Nachteilig hierbei ist allerdings, dass beim Einstecken der Kabel Fehler leicht entstehen können und nicht bemerkt werden. Des Weiteren kommen mittlerweile Kommunikation-Switches vermehrt zum Einsatz, wodurch sich anhand des Anschlusses die Position der Kameras nicht mehr ermitteln lassen, da insbesondere die Datenströme auf einem gemeinsamen physikalischen Link aggregiert werden.

Die EP 2 530 647 A1 beschreibt ein Verfahren zur Kalibrierung eines Surround-View-Systems eines Fahrzeugs umfassend vier an verschiedenen Stellen des Fahrzeugs angeordnete Weitwinkel-Kameras und eine mit den Kameras verbundene Bildverarbeitungseinheit. Dabei werden durch die Bildverarbeitungseinheit die relative Position und Ausrichtung zwischen den Kameras auf der Grundlage von erfassten Bildern von mehreren speziellen Kalibrierungsobjekten (insbesondere schachbrettmusterartige Markierungen) bestimmt, die in einem Überlappungsbereich von Sichtfeldern (FOVs) der Kameras positioniert sind. Es werden also jeweils Bildpaare ausgewertet, die von Kameras mit sich überlappenden Sichtfeldern aufgenommen wurden. Hierzu wird mit einer ersten Kamera ein Bild der Kalibrierungsobjekte erfasst und es wird mit einer zweiten Kamera ein weiteres Bild der Kalibrierungsobjekte erfasst, wobei die Kalibrierungsobjekte in einem Überlappungsbereich eines Sichtfeldes der ersten Kamera und eines Sichtfeldes der zweiten Kamera positioniert sind, und wobei sich die Kalibrierungsobjekte während der Erfassung dieser Bilder in der gleichen Position relativ zum Fahrzeug befinden. Dann werden eine Position und Ausrichtung der ersten Kamera relativ zu den Kalibrierungsobjekten auf der Grundlage des aufgenommenen Bildes bestimmt und es werden eine Position und Ausrichtung der zweiten Kamera relativ zu diesen Kalibrierungsobjekten auf der Grundlage des aufgenommenen weiteren Bildes bestimmt. Basierend darauf werden anschließend eine relative Position und Ausrichtung zwischen der zweiten Kamera und der ersten Kamera festgelegt. Dies wird für alle Paare von Kameras mit überlappenden Sichtfeldern durchgeführt. Auf Grundlage der so ermittelten relativen Positionen und Ausrichtungen der Kameras und einer ermittelten absoluten Position und Ausrichtung einer beliebigen der vier Kameras werden dann die absoluten Positionen und Ausrichtungen der Kameras des Surround-View-Systems bestimmt.

Aus US 2016/284087 A1 ist ein Verfahren bekannt, das die Bewegung eines Fahrzeugs verwendet, um die Orientierung eines Kamerasystems des Fahrzeugs relativ zum Fahrzeug zu bestimmen. Dazu werden Merkmalspunkte auf einer Straßenoberfläche identifiziert, wobei anschließend mittels eines Structurefrom-Motion-Algorithmus die Positionen und die Winkel der Merkmalspunkte relativ zu einem Kamerakoordinatensystem ermittelt werden. Die ermittelten Merkmalspunkte werden als eine erste Bedingung für die Ermittlung der extrinsischen Kameraparameter verwendet. Als eine zweite Bedingung werden außerdem in den Kamerabildern abgebildete Kanten des Fahrzeugs verwendet.

Ausgehend hiervon ist es nun Aufgabe der Erfindung, ein Verfahren bereitzustellen, welches eine einfach durchzuführende und weniger fehleranfällige Lagebestimmung einzelner Kameras eines Surround-View-Systems ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Kamerasystem sowie ein Fahrzeug sind Gegenstände der nebengeordneten Patentansprüche.

Gemäß einem ersten Aspekt bezieht sich die vorliegende Erfindung auf ein Verfahren zur Lokalisierung von Kameras, insbesondere Kameras eines Surround-View-Systems, mit den Schritten:
- Aktivierung der Kameras,
- Aufnehmen von Bildern und/oder Videos durch die Kameras,
- Analyse von Datenströmen,
- Erstellen einer verketteten Liste der Kameras,
- Identifizierung zumindest einer absoluten Kameraposition und/oder einer Kamera, und
- Ableiten der absoluten Positionen der restlichen Kameras.

Durch die Analyse der Datenströme erhält man eine verkettete Liste der Kameras. Man erhält insbesondere eine Abhängigkeit der Kameras zueinander. Hierdurch kann eine Relativposition jeder Kamera definiert werden. Man erhält im Wesentlichen die Information darüber, welche Kameras nebeneinander angeordnet sind. Jede Kamera hat prinzipiell einen Nachfolger und einen Vorgänger. Die genaue Position der einzelnen Kameras, insbesondere die absolute Position, kann durch diesen Schritt grundsätzlich noch nicht erkannt werden. Ist jedoch eine absolute Position einer einzigen Kamera bekannt, dann lassen sich hieraus aufgrund der verketteten Liste auch die absoluten Positionen der restlichen Kameras bestimmen. Vorteilhafterweise wird genau eine absolute einzige Kameraposition bestimmt.

Der Kern der Erfindung liegt insbesondere darin, dass ein zweistufiges Verfahren bereitgestellt wird, wobei in einem ersten Schritt eine verkettete Liste der Kameras zueinander erstellt wird. Hierdurch lässt sich die Relativposition jeder Kamera klar definieren. In einem weiteren Schritt wird dann mindestens eine absolute Position einer Kamera identifiziert. Anhand der absoluten Kameraposition und der verketteten Liste lassen sich dann die absoluten Positionen der anderen Kameras ableiten.

Ein wesentlicher Vorteil des erfindungsgemäßen Verfahren ist es, dass ohne den Einsatz zusätzlicher Hardware dynamisch erkannt werden kann, an welcher Position welche Kamera ist. Dies ist nicht nur für eine Neuinstallation von Bedeutung, sondern senkt auch die Kosten beim Austausch einer Kamera. Das erfindungsgemäße Verfahren weist zudem den Vorteil auf, dass generische Kameras verwendet werden können. Ferner können durch das Verfahren Codier- bzw. Programmierfehler vermieden werden. Auch muss gängige Hardware nicht verändert werden, wodurch das Verfahren in bestehende Netzwerke integriert werden kann.

Insbesondere dient das Verfahren zur Lokalisierung von Kameras an einem Fahrzeug. Mit dem Verfahren lassen sich somit bevorzugt der genaue Anbringungsort der Kameras ermitteln, also beispielsweise, ob die Kamera in einem Frontbereich oder einem Heckbereich oder an einer Seite des Fahrzeugs angeordnet ist. Mit Hilfe der Erfindung bedarf es insbesondere keiner codierten Kameras, es können bevorzugt generische Kameras verwendet werden, bzw. den Kameras müssen keine fixen Positionen zugeordnet sein.

Im Sinne der Erfindung können unter Datenströme sowohl Bilder als auch Videoframes verstanden werden. Die Datenströme der Kameras, insbesondere der Ethernet-Kameras, können leicht als solche identifiziert werden, da hierbei bevorzugt spezielle Protokolle zur Einbettung von Videos verwendet werden.

Gemäß der Erfindung ist es ausreichend, wenn nicht alle Kameras aktiviert werden. Bevorzugt werden aber alle Kameras aktiviert. Von Vorteil ist es, wenn jede Kamera Bildern und/oder Videos aufnimmt. Dies ist aber nicht zwingend notwendig. Es ist grundsätzlich ausreichend, wenn nur einige Kameras Bilder bzw. Videos aufnehmen.

Die Analyse der Datenströme erfolgt bevorzugt in einer Fusionseinheit. Hierzu werden insbesondere die Kameradatenströme an die Fusionseinheit gesendet. Von Vorteil ist es, wenn aus den empfangenen Datenströme Absenderadressen extrahiert werden. Hierdurch lassen sich die Daten den einzelnen Kameras zuordnen.

In einer bevorzugten Ausgestaltung wird eine Zeitsynchronisation durchgeführt. Durch die Zeitsynchronisation können exakte Rückschlüsse über den Aufnahmezeitpunkt der einzelnen Kameras gemacht werden. Somit lassen sich dann insbesondere Datenströme verschiedener Kameras, die zum selben Zeitpunkt gemacht wurden, miteinander vergleichen. Insbesondere können durch die zeitliche Synchronisation Videoframes bzw. Bilder einander zugeordnet werden, auch wenn die Daten unterschiedlich lange Wege im Fahrzeugnetzwerk nehmen. Bevorzugt findet eine Zeitsynchronisation nach der Aktivierung der Kameras und/oder vor dem Erstellen von Bildern statt.

Zur Zeitsynchronisation wird insbesondere auf gängige Methoden zurückgegriffen. Die Methoden basieren insbesondere auf Standards wie Autosar 4.2.2, gPTP, IEEE 802.1AS sowie IEEE802.1AS-rev, die aus der IEEE Audio/Video Bridging Task Group hervorgegangen sind.

Von Vorteil ist es, wenn die Analyse der Datenströme einen Vergleich der Datenströme umfasst. Insbesondere umfasst die Analyse einen Vergleich der Datenströme mit gleicher Zeiteinheit. Bei dem Vergleich der Datenströme wird insbesondere nach Gemeinsamkeiten, bevorzugt nach Gemeinsamkeiten in Randbereichen gesucht. Indem benachbarte Kameras bevorzugt einen Überschneidungsbereich aufweisen, also teilweise denselben Bereich erfassen, weisen diese zumindest in Randbereichen Gemeinsamkeiten in den Datenströmen auf. Wird bei der Durchführung des Vergleichs von Datenströmen zweier Kameras Gemeinsamkeiten erkannt, dann kann daraus gefolgert werden, dass es sich bei diesen Kameras um Nachbarn handelt. Diese Kameras werden dann insbesondere in der verketteten Liste hintereinander aufgeführt.

Es ist grundsätzlich auch möglich, dass die Qualität der Bilder bzw. der Videoframes untersucht wird. Liegt eine ausreichende Qualität vor, dann werden die jeweiligen Sequenzen, insbesondere die Bilder bzw. Videoframes mit gleicher Zeiteinheit, miteinander verglichen. Ist die Qualität der Bilder nicht ausreichend, dann wird bevorzugt ein Backup-Verfahren gestartet.

Bevorzugt wird die Anzahl an Kameras identifiziert, die aktiv sind und/oder Bilder bzw. Videos aufnehmen.

Gemäß einer Ausgestaltung der vorliegenden Erfindung kann die Fusionseinheit die Bilder und/oder Videoframes abspeichern. Bevorzugt speichert die Fusionseinheit die Bilder und/oder Videoframes in einem Zwischenspeicher ab. Insbesondere werden Datenströme mit gleicher Zeiteinheit selektiert und dann abgespeichert. Weist das System beispielsweise vier Kameras auf, dann werden die Bilder bzw. Videoframes bevorzugt mit gleicher Zeiteinheit selektiert und dann abspeichert. Es liegen dann folglich vier Bilder im Zwischenspeicher vor.

Um die Datenmenge möglichst überschaubar zu lassen, werden bevorzugt nur wenige Sequenzen bzw. eine Momentaufnahme aufgenommen und verglichen. Dies wird insbesondere durch die Zeitsynchronisation ermöglicht.

In einer bevorzugten Ausgestaltung der Erfindung wird zur Identifizierung zumindest einer absoluten einzigen Kameraposition überprüft, ob für mindestens eine Kamera eine bekannte absolute Position vorliegt. Dies kann insbesondere dann vorliegen, wenn eine Kamera ausgetauscht worden ist oder eine Kamera speziell kodiert ist. Liegt eine bekannte absolute Position vor, dann können die Positionen der anderen Kameras einfach durch die verkette Liste abgeleitet werden.

Zur Identifizierung der absoluten Positionen der Kameras kann aber auch eine Analyse der Bilder bzw. der Videoframes in Bezug auf einen Betriebsmodus und/oder Fahrmodus und/oder auf das Erkennen von Objekten erfolgen. Als Fahrmodus kann ein Gyro, ein Lenkwinkeleinschlag, eine direkt gewählte Fortbewegungsart, wie beispielsweise ein Vorwärtsgang oder ein Rückwärtsgang, oder eine indirekte Fortbewegungsart, wie beispielsweise auf einem Band, einem LKW oder einem Schiff, ausgewählt werden. Die Identifizierung erfolgt insbesondere dahingehend, dass erst die Kameras aktiviert bzw. gestartet werden und die Bildinhalte analysiert werden. Ein Fahrmodus bzw. ein Betriebsmodus wird zudem ausgewählt, der die Position des Fahrzeugs verändert. Es werden dann bevorzugt Änderungen in den Bildinhalten ermittelt. Anhand dieser Änderungen kann dann die absolute Position der Kamera abgeleitet werden.

Weist das Kamerasystem vier Kameras auf, dann ist es durch das erfindungsgemäße Verfahren prinzipiell ausreichend, dass für nur zwei Kameras ein Nachbar gefunden wird. Ist beispielsweise eine Kamera A der Nachbar von einer Kamera B und eine Kamera C der Nachbar von einer Kamera D, dann kann auch so eine verkettete Liste erstellt werden, obwohl zwei Verlinkungen fehlen. Wenn beispielsweise Kamera A der linke Nachbar von Kamera B ist und Kamera D der rechte Nachbar von Kamera C ist, dann sieht die Liste folgendermaßen aus: A-B-C-D. Dies kann eindeutig abgeleitet werden. Das Verfahren braucht also nur zwei Nachbarschaften zu erkennen, bei dem mindestens 3 Knoten beteiligt sind. Somit funktioniert das Verfahren sogar, wenn eine Kamera deaktiviert ist, nicht montiert ist oder einen Fehler hat.

Gemäß einem zweiten Aspekt bezieht sich die Erfindung auf ein Kamerasystem aufweisend eine Mehrzahl an Kameras zur Erfassung einer Fahrzeugumgebung und eine Fusionseinheit, wobei die Fusionseinheit derart ausgebildet ist, dass sie empfangene Datenströme der Kameras analysiert, wodurch eine verkettete Liste der Kameras erstellt wird, dass sie zumindest eine absolute Kameraposition identifiziert und dass sie anhand der zumindest einen absoluten Kameraposition und der verketteten Liste die absoluten Positionen der restlichen Kameras ableitet. Das Kamerasystem eignet sich insbesondere zur Durchführung des erfindungsgemäßen Verfahrens.

Die Kameras weisen insbesondere einen Öffnungswinkel von zumindest 180° auf. Von Vorteil ist es, wenn es sich bei den Kameras um Fischaugenkameras handelt. Die Kameras des Kamerasystems weisen bevorzugt unterschiedliche Erfassungsbereich auf, wobei insbesondere benachbarte Kameras einen Überschneidungsbereich haben. Vorteilhafterweise handelt es sich bei den Kameras um generische Kameras, also insbesondere um allgemeingültige Kameras. Die Kameras können alle gleich ausgebildet sein.

Das Kamerasystem umfasst idealerweise vier Kameras. Vorteilhafterweise handelt es sich bei dem Kamerasystem um ein Surround-View-Kamerasystem.

Gemäß einem dritten Aspekt bezieht sich die Erfindung auf ein Fahrzeug mit einem erfindungsgemäßen Kamerasystem. Bevorzugt sind die Kameras an unterschiedlichen Seiten des Fahrzeugs angeordnet.

Weitere vorteilhafte Ausgestaltungen ergeben sich aus den Zeichnungen. Hierbei zeigen:
- Fig. 1:: schematische Darstellung eines Ablaufdiagramms eines erfindungsgemäßen Verfahrens zur Lokalisierung von Kameras in einer Ausgestaltung;
- Fig. 2:: schematische Darstellung eines Ablaufdiagramms zur Erstellung einer verketteten Liste in einer Ausgestaltung;
- Fig. 3:: schematische Darstellung eines Ablaufdiagramms zur Ermittlung absoluter Kamerapositionen in einer Ausgestaltung;
- Fig. 4:: schematische Darstellung eines erfindungsgemäßen Kamerasystems in einer Ausgestaltung.

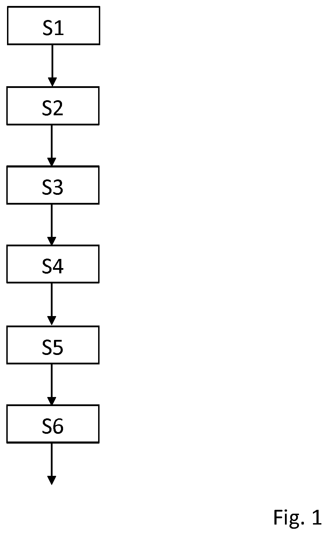

Figur 1 zeigt eine schematische Darstellung eines Ablaufdiagramms eines erfindungsgemäßen Verfahrens zur Lokalisierung von Kameras 12A, 12B, 12C, 12D in einer Ausgestaltung. Bei den Kameras 12A, 12B, 12C, 12D handelt es sich bevorzugt um an einem Fahrzeug angeordnete Kameras, wobei die Kameras insbesondere einem Surround-View-System zugeordnet sind. Die Kamera 12A ist dabei bevorzugt vorne am Kühlergrill, die Kamera 12C am Heck und die Kameras 12B und 12D sind jeweils im Bereich eines Seitenspiegels des Fahrzeugs angeordnet. Die benachbarten Kameras 12A, 12B, 12C, 12D weisen zumindest teilweise einen Überschneidungsbereich 16AB, 16BC, 16CD, 16DA auf.

Erfindungsgemäß werden die Kameras 12A, 12B, 12C, 12D in einem ersten Schritt aktiviert (S1). Von Vorteil ist es, wenn eine Zeitsynchronisation durchgeführt wird. Durch die Zeitsynchronisation können exakte Rückschlüsse über den Aufnahmezeitpunkt der einzelnen Kameras 12A, 12B, 12C, 12D gemacht werden. Hierdurch lassen sich dann Datenströme der verschiedenen Kameras 12A, 12B, 12C, 12D miteinander vergleichen, die zum selben Zeitpunkt gemacht wurden. Durch die zeitliche Synchronisation können insbesondere Videoframes bzw. Bilder einander zugeordnet werden, auch wenn diese unterschiedlich lange Wege im Fahrzeugnetzwerk zurücklegen müssen. Die Zeitsynchronisation erfolgt insbesondere vor der Aufnahme der Bilder bzw. Videos. In einem zweiten Schritt nehmen die Kameras 12A, 12B, 12C, 12D Bilder bzw. Videos der Fahrzeugumgebung auf (S2).

In einem dritten Schritt werden Datenströme analysiert (S3). Die Analyse findet bevorzugt in einer Fusionseinheit 14 statt. Von Vorteil ist es, wenn die Analyse der Datenströme einen Vergleich der Datenströme, insbesondere der Datenströme mit gleicher Zeiteinheit, umfasst. Bei dem Vergleich der Datenströme wird bevorzugt nach Gemeinsamkeiten in Randbereichen gesucht. Indem benachbarte Kameras bevorzugt einen Überschneidungsbereich 16AB, 16BC, 16CD, 16DA aufweisen, also teilweise denselben Bereich erfassen, weisen die Datenströme zumindest in den Randbereichen Gemeinsamkeiten auf. Wird bei der Durchführung des Vergleichs von Datenströmen zweier Kameras Gemeinsamkeiten erkannt, dann kann daraus gefolgert werden, dass es sich bei diesen Kameras um Nachbarn handelt.

Insgesamt erhält man durch die Analyse der Datenströme eine verkettete Liste der Kameras (S4). Man erhält eine Abhängigkeit der Kameras zueinander. Hierdurch kann eine relative Position jeder Kamera definiert werden. Man erhält im Wesentlichen die Information darüber, welche Kameras nebeneinander angeordnet sind. Jede Kamera hat prinzipiell einen Nachfolger und einen Vorgänger.

In einem weiteren Schritt identifiziert man zumindest eine absolute einzige Kameraposition und/oder man identifiziert eine Kamera (S5). Bei der Identifikation der Position und/oder der Kamera kann überprüft werden, ob für mindestens eine Kamera bereits eine bekannte absolute Position vorliegt. Dies kann insbesondere dann vorliegen, wenn eine Kamera ausgetauscht worden ist oder eine Kamera speziell kodiert ist. Ferner kann zur Identifizierung der absoluten Positionen der Kameras eine Analyse des Bildes bzw. des Videoframes in Bezug auf einen Betriebsmodus und/oder Fahrmodus und/oder auf das Erkennen von Objekten erfolgen.

Kennt man nun die absolute Position einer einzigen Kamera, dann kann daraus die absoluten Positionen der restlichen Kameras abgeleitet werden. Hierfür wird die verkettete Liste herangezogen.

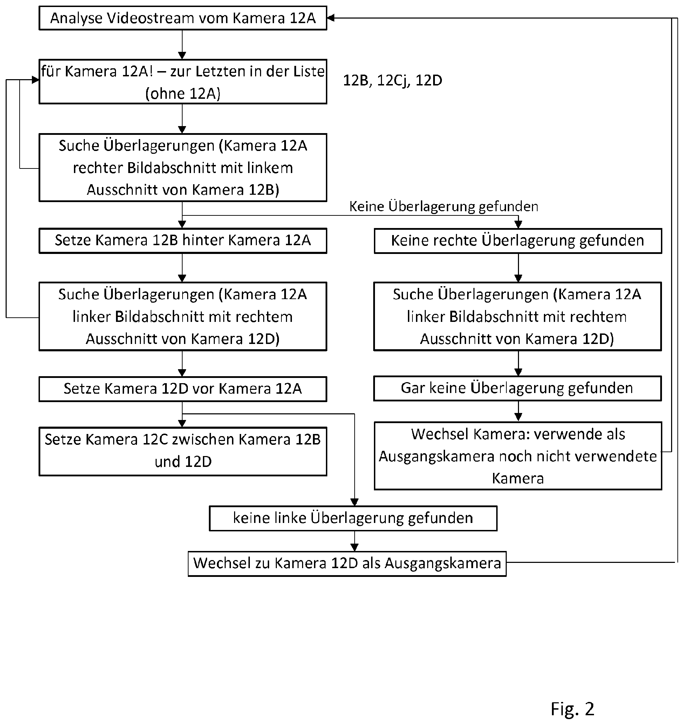

Figur 2 zeigt eine schematische Darstellung eines Ablaufdiagramms zur Erstellung einer verketteten Liste in einer Ausgestaltung. In einem ersten Schritt wird beispielsweise der Videostream bzw. der Datenstrom von Kamera 12A analysiert. Die Auswahl der Kamera kann zufällig geschehen oder nach einem vorgegebenen Schema erfolgen. Man kann beispielsweise bei der Kamera mit der kleinsten Absenderadresse beginnen. Danach zieht man einen Datenstrom von einer anderen Kamera 12B, 12C, 12D heran. Die Datenströme vergleicht man miteinander, wobei man hierbei nach Überlagerungen bzw. Gemeinsamkeiten sucht. Indem benachbarte Kameras in der Regel Überschneidungsbereiche aufweisen, weisen die aufgenommenen Bilder bzw. Videos von benachbarten Kameras in ihren Randbereichen Gemeinsamkeiten bzw. Überlagerungen auf. Man vergleicht daher beispielsweise den rechten Bildabschnitt von Kamera 12A mit dem linken Bildabschnitt von Kamera 12B. Erkennt man hier eine Überlagerung, dann lässt dies die Schlussfolgerung zu, dass es sich um benachbarte Kameras handelt und man kann in der verketteten Liste Kamera 12B hinter Kamera 12A setzen. In einem nächsten Schritt vergleicht man dann beispielsweise den linken Bildabschnitt von Kamera 12A mit einem rechten Bildabschnitt von Kamera 12D. Treten hier Überlagerungen auf, dann kann man Kamera 12D vor Kamera 12A in der verketteten Liste setzen. Weist das Kamerasystem vier Kameras auf, dann kann man nun Kamera 12C einfach zwischen die Kameras 12D und 12B setzen, ohne dass von dieser Kamera Bilder bzw. Datenströme untersucht worden sind. Insgesamt hat man somit eine verkettete Liste der Kameras erstellt, wodurch die Relativpositionen der Kameras klar definiert sind.

Sollten bei der Analyse Lücken beim Vergleich entstehen, dann kann die Suche erneut mit einer anderen Kamera durchlaufen werden und die schon gefundenen Datensätze können mit den neuen ergänzt werden.

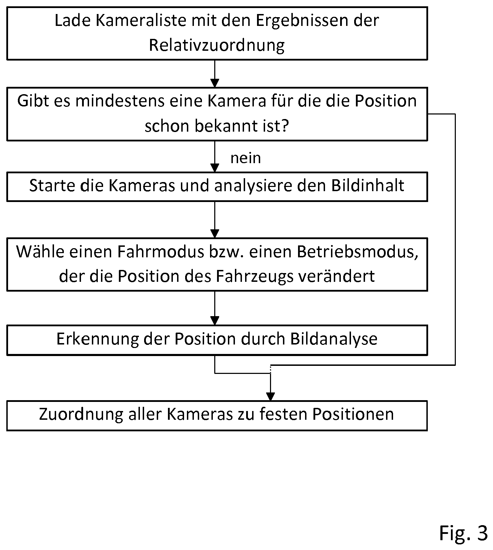

Figur 3 zeigt eine schematische Darstellung eines Ablaufdiagramms zur Ermittlung absoluter Kamerapositionen in einer Ausgestaltung. Hierzu wird bevorzugt in einem ersten Schritt die verkettete Liste, also die Kameraliste mit den Ergebnissen der Relativzuordnung, geladen. Dann wird geprüft, ob es eine Kamera gibt, für die eine absolute Position schon bekannt ist. Dies kann beispielsweise dann vorliegen, wenn eine Kamera speziell codiert ist. Ist dies gegeben, dann lassen sich ausgehend von der bekannten Position und unter Heranziehen der verketteten Liste alle anderen Positionen ableiten.

Kennt man keinerlei absolute Kameraposition, dann werden die Kameras gestartet, entweder einzeln oder alle. Ferner wird ein Fahrmodus bzw. ein Betriebsmodus gewählt, der die Position des Fahrzeugs verändert. Ändert sich die Position des Fahrzeugs dann gehen damit grundsätzlich auch Veränderungen in den Datenströmen der Kameras einher. In einem weiteren Schritt erfolgt insbesondere eine Analyse der Bildinhalte in Bezug auf den ausgewählten Modus. Befindet sich das Fahrzeug beispielsweise in einer Fertigungsstraße, beim Transport oder beim Kunden in Bewegung, dann kann sehr einfach zwischen Front- und Heckkamera unterschieden werden. Durch die Bildanalyse lässt sich Rückschlüsse auf die Kameraposition ziehen, wodurch dann eine Zuordnung aller Kameras zu festen Positionen möglich ist.

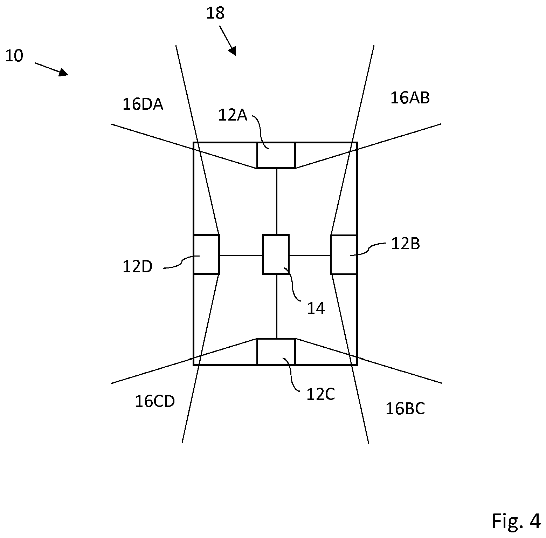

Figur 4 zeigt eine schematische Darstellung eines erfindungsgemäßen Kamerasystems 10 in einer Ausgestaltung. Das Kamerasystem 10 umfasst eine Mehrzahl an Kameras 12A, 12B, 12C, 12D zur Erfassung einer Fahrzeugumgebung. Ferner umfasst das Kamerasystem 10 eine Fusionseinheit 14. Die Fusionseinheit 14 ist derart ausgebildet, dass sie empfangene Datenströme der Kameras 12A, 12B, 12C, 12D analysiert, wodurch eine verkettete Liste der Kameras erstellt wird. Ferner ist die Fusionseinheit 14 derart ausgebildet, dass sie zumindest eine absolute Kameraposition identifiziert und dass sie anhand der zumindest einen absoluten Kameraposition und der verketteten Liste die absoluten Positionen der restlichen Kameras 12A, 12B, 12C, 12D ableitet.

Die Kameras 12A, 12B, 12C, 12D weisen insbesondere einen Öffnungswinkel von zumindest 180° auf. Die Kameras des Kamerasystems weisen bevorzugt unterschiedliche Erfassungsbereich auf, wobei insbesondere benachbarte Kameras einen Überschneidungsbereich 16AB, 16BC, 16CD, 16DA haben. Vorteilhafterweise handelt es sich bei den Kameras 12A, 12B, 12C, 12D um generische Kameras.

Vorteilhafterweise handelt es sich bei dem Kamerasystem 10 um ein Surround-View-Kamerasystem, wobei das System vier Kameras 12A, 12B, 12C, 12D umfasst.

Die Erfindung wird durch die unabhängigen Ansprüche definiert. Die abhängigen Ansprüche definieren vorteilhafte Ausführungsformen.

## Patentansprüche

1. Verfahren zur Lokalisierung von Kameras (12A, 12B, 12C, 12D), insbesondere Kameras eines Surround-View-Systems, mit den Schritten:
- Aktivierung der Kameras (12A, 12B, 12C, 12D) (S1),
- Aufnehmen von Bildern und/oder Videos durch die Kameras (12A, 12B, 12C, 12D) (S2),
- Analyse von Datenströmen (S3),
- Erstellen einer verketteten Liste der Kameras (12A, 12B, 12C, 12D) (S4),
- Identifizierung zumindest einer absoluten Kameraposition und/oder einer Kamera (12A, 12B, 12C, 12D) (S5),
- Ableiten der absoluten Positionen der restlichen Kameras (12A, 12B, 12C, 12D) (S6),
**dadurch gekennzeichnet, dass** eine Zeitsynchronisation durchgeführt wird, und dass die Analyse der Datenströme einen Vergleich der Datenströme mit gleicher Zeiteinheit umfasst.

2. Verfahren nach dem vorangehenden Anspruch, **dadurch gekennzeichnet, dass** der Vergleich eine Suche nach Gemeinsamkeiten in den Datenströmen, insbesondere in Randbereichen, umfasst.

3. Verfahren nach einem der vorangehenden Ansprüche, **dadurch gekennzeichnet, dass** die Anzahl an Kameras (12A, 12B, 12C, 12D) identifiziert wird, die aktiv sind und/oder Bilder bzw. Videos aufnehmen.

4. Verfahren nach einem der vorangehenden Ansprüche, **dadurch gekennzeichnet, dass** die Bilder und/oder Videoframes abspeichert werden.

5. Verfahren nach dem vorangehenden Anspruch, **dadurch gekennzeichnet, dass** Datenströme mit gleicher Zeiteinheit zusammen abgespeichert werden.

6. Verfahren nach einem der vorangehenden Ansprüche, **dadurch gekennzeichnet, dass** zur Identifizierung zumindest einer absoluten Kameraposition überprüft wird, ob für mindestens eine Kamera (12A, 12B, 12C, 12D) eine bekannte absolute Position vorliegt.

7. Verfahren nach einem der vorangehenden Ansprüche, **dadurch gekennzeichnet, dass** zur Identifizierung der absoluten Position eine Analyse des Bildes bzw. des Videoframes in Bezug auf einen Betriebsmodus /oder Fahrmodus und/oder auf das Erkennen von Objekten erfolgt.

8. Kamerasystem (10), insbesondere zur Durchführung eines Verfahrens nach einem der vorangehenden Ansprüche, aufweisend eine Mehrzahl an Kameras (12A, 12B, 12C, 12D) zur Erfassung einer Fahrzeugumgebung und eine Fusionseinheit (14), wobei die Fusionseinheit derart ausgebildet ist, dass sie empfangene Datenströme der Kameras (12A, 12B, 12C, 12D) analysiert, wodurch eine verkettete Liste der Kameras (12A, 12B, 12C, 12D) erstellt wird, dass sie zumindest eine absolute Kameraposition identifiziert und dass sie anhand der zumindest einen absoluten Kameraposition und der verketteten Liste die absoluten Positionen der restlichen Kameras (12A, 12B, 12C, 12D) ableitet, **dadurch gekennzeichnet, dass** die Fusionseinheit ferner derart ausgebildet ist, dass sie im Rahmen der Analyse der Datenströme einen Vergleich der Datenströme mit gleicher Zeiteinheit durchführt.

9. Kamerasystem (10) nach Anspruch 8, **dadurch gekennzeichnet, dass** es sich um ein Surround-View-Kamerasystem handelt und die Kameras (12A, 12B, 12C, 12D) einen Öffnungswinkel von zumindest 180° aufweisen und benachbarte Kameras (12A, 12B, 12C, 12D) einen Überschneidungsbereich (16AB, 16BC, 16CD, 16DA) aufweisen.

10. Fahrzeug (18) mit einem Kamerasystem (10) nach einem der Ansprüche 8 oder 9.

## Claims

1. Method for locating cameras (12A, 12B, 12C, 12D), in particular cameras of a surround-view system, comprising the following steps:
- activating the cameras (12A, 12B, 12C, 12D) (S1),
- recording images and/or videos by means of the cameras (12A, 12B, 12C, 12D) (S2),
- analysis of data streams (S3),
- creating a concatenated list of the cameras (12A, 12B, 12C, 12D) (S4),
- identifying at least one absolute camera position and/or one camera (12A, 12B, 12C, 12D) (S5),
- deriving the absolute positions of the remaining cameras (12A, 12B, 12C, 12D) (S6),
**characterized in that** a time synchronisation is carried out, and **in that** the analysis of the data streams comprises a comparison of the data streams with the same time unit.

2. Method according to the preceding claim, **characterized in that** the comparison comprises a search for commonalities in the data streams, in particular in edge regions.

3. Method according to either of the preceding claims, **characterized in that** the number of cameras (12A, 12B, 12C, 12D) which are active and/or record images or videos is identified.

4. Method according to any of the preceding claims, **characterized in that** the images and/or video frames are stored.

5. Method according to the preceding claim, **characterized in that** data streams with the same time unit are stored together.

6. Method according to any of the preceding claims, **characterized in that** for identifying at least one absolute camera position, a check is made to ascertain whether a known absolute position is present for at least one camera (12A, 12B, 12C, 12D).

7. Method according to any of the preceding claims, **characterized in that** for identifying the absolute position, an analysis of the image or the video frame with respect to an operating mode or driving mode and/or with respect to the recognition of objects is carried out.

8. Camera system (10), in particular for carrying out a method according to any of the preceding claims, comprising a plurality of cameras (12A, 12B, 12C, 12D) for capturing a vehicle environment and a fusion unit (14), wherein the fusion unit is configured in such a way that it analyses received data streams from the cameras (12A, 12B, 12C, 12D), thereby creating a concatenated list of the cameras (12A, 12B, 12C, 12D), that it identifies at least one absolute camera position and that it derives the absolute positions of the remaining cameras (12A, 12B, 12C, 12D) on the basis of the at least one absolute camera position and the concatenated list, **characterized in that** the fusion unit is furthermore configured in such a way that it performs a comparison of the data streams with the same time unit in the context of the analysis of the data streams.

9. Camera system (10) according to Claim 8, **characterized in that** it is a surround-view camera system and the cameras (12A, 12B, 12C, 12D) have an aperture angle of at least 180° and adjacent cameras (12A, 12B, 12C, 12D) have an overlap region (16AB, 16BC, 16CD, 16DA).

10. Vehicle (18) comprising a camera system (10) according to either of Claims 8 and 9.

## Revendications

1. Procédé de localisation de caméras (12A, 12B, 12C, 12D), notamment de caméras d'un système de vision panoramique, comprenant les étapes suivantes :
- activation des caméras (12A, 12B, 12C, 12D) (S1),
- enregistrement d'images et/ou de vidéos par les caméras (12A, 12B, 12C, 12D) (S2),
- analyse de flux de données (S3),
- création d'une liste chaînée des caméras (12A, 12B, 12C, 12D) (S4),
- identification d'au moins une position absolue de caméra et/ou d'une caméra (12A, 12B, 12C, 12D) (S5),
- déduction des positions absolues des caméras restantes (12A, 12B, 12C, 12D) (S6),
**caractérisé en ce qu'**une synchronisation temporelle est effectuée et **en ce que** l'analyse des flux de données comprend une comparaison des flux de données ayant la même unité de temps.

2. Procédé selon la revendication précédente, **caractérisé en ce que** la comparaison comprend une recherche de points communs dans les flux de données, en particulier dans les périphéries.

3. Procédé selon l'une des revendications précédentes, **caractérisé en ce que** le nombre de caméras (12A, 12B, 12C, 12D) qui sont actives et/ou enregistrent des images ou des vidéos est identifié.

4. Procédé selon l'une des revendications précédentes, **caractérisé en ce que** les images et/ou les trames vidéo sont mémorisées.

5. Procédé selon la revendication précédente, **caractérisé en ce que** les flux de données ayant la même unité de temps sont mémorisés ensemble.

6. Procédé selon l'une des revendications précédentes, **caractérisé en ce que** pour identifier au moins une position de caméra absolue, une vérification est effectuée en vue de déterminer s'il y a présence d'une position absolue connue pour au moins une caméra (12A, 12B, 12C, 12D).

7. Procédé selon l'une des revendications précédentes, **caractérisé en ce que**, pour identifier la position absolue, une analyse de l'image ou de la trame vidéo est effectuée par rapport à un mode de fonctionnement /ou un mode de conduite et/ou à la reconnaissance d'objets.

8. Système de caméras (10), notamment destiné à la mise en œuvre d'un procédé selon l'une des revendications précédentes, possédant une pluralité de caméras (12A, 12B, 12C, 12D) destinées à capturer l'environnement d'un véhicule et une unité de fusion (14), l'unité de fusion étant configurée de telle sorte qu'elle analyse les flux de données reçus des caméras (12A, 12B, 12C, 12D), ce qui permet de créer une liste chaînée des caméras (12A, 12B, 12C, 12D), qu'elle identifie au moins une position absolue de caméra et qu'elle déduit, à l'aide de l'au moins une position absolue de caméra et de la liste chaînée, les positions absolues des caméras restantes (12A, 12B, 12C, 12D), **caractérisé en ce que** l'unité de fusion est en outre configurée de telle sorte qu'elle effectue, dans le cadre de l'analyse des flux de données, une comparaison des flux de données ayant la même unité de temps.

9. Système de caméras (10) selon la revendication 8, **caractérisé en ce qu'**il s'agit d'un système de caméras à vision panoramique et que les caméras (12A, 12B, 12C, 12D) présentent un angle d'ouverture d'au moins 180° et que les caméras voisines (12A, 12B, 12C, 12D) présentent une zone de recouvrement (16AB, 16BC, 16CD, 16DA).

10. Véhicule (18) comprenant un système de caméras (10) selon l'une des revendications 8 ou 9.
